# EUROPEAN PATENT APPLICATION

(11) **EP 2 555 107 A1**
(43) Date of publication of application: **06.02.2013**
(21) Application number: 12150544.0
(22) Date of filing: 10.01.2012
(51) Int. Cl.: G06F 3/14, G06F 3/147, G09G 5/00

(54) **Printing system and aligning structure of wireless data transmission interface thereof**

(30) Priority: 02.08.2011 TW 100127431
(71) Applicant: Acer Incorporated, New Taipei City 221 (TW)
(72) Inventor: Yeung, Sip Kim, 221 New Taipei City (TW)
(74) Representative: Chamberlain, Alan James

(57) **Abstract**

A printing system and an aligning structure of a wireless data transmission interface thereof are provided, in which a printing apparatus includes a coil, a modulation unit, a drive control unit, and an electronic paper (ePaper). The coil receives a wireless electric energy carrying a printing data from an external host. The modulation unit demodulates the printing data and an operation electric energy from the wireless electric energy received by the coil, in which the operation electric energy is used as an energy source of the printing apparatus. The drive control unit receives the printing data and drives the ePaper to display the printing data.

## Description

### CROSS-REFERENCE TO RELATED APPLICATION

This application claims the priority benefit of Taiwan application serial no. 100127431, filed on August 2, 2011. The entirety of the above-mentioned patent application is hereby incorporated by reference herein and made a part of this specification.

### BACKGROUND OF THE INVENTION

### Field of the Invention

The invention relates generally to a printing system, and more particularly, to an electronic paper (ePaper) printing system which does not require a battery.

### Description of Related Art

The electronic book (eBook) or the electronic reader (eReader) can be implemented in disparate technologies such as the smartphone or the tablet. The current eBooks or eReaders require a battery to provide an operating electric energy, for example the operating electric energy required to provide the backlight source or the liquid crystal display. The internal battery of the eBook or the eReader can provide the operating electric energy required by the devices. However, due to the weight and volume of the battery, a user feels inconvenienced when carrying the eBook or the eReader. Moreover, in certain occasions, for instance during the period when an airplane takes off or lands, there is a chance the user is asked to turn off the eBook or the eReader and cannot continue reading. If the displayed content can be printed, then even in occasions when electronic devices are being asked to be turned off, the user can still continue to read the eBook.

### SUMMARY OF THE INVENTION

The invention provides a printing system having a host and a printing apparatus. The printing apparatus does not need to be configured with a battery to provide a user the display content of an ePaper to read.

The invention provides an aligning structure of a wireless data transmission interface between the host and the printing apparatus. When the host transmits a printing data and an operating electric energy to the printing apparatus, the aligning structure can align a coil of the host and a coil of the printing apparatus with each other.

According to an embodiment of the invention, a printing system including a host and a printing apparatus is provided. The host includes a first coil, a first modulation unit, and a processing unit. The processing unit outputs a printing data to the first modulation unit. The first modulation unit loads the printing data in a first AC electric energy and outputs a second AC electric energy carrying the printing data to the first coil. The first coil converts the second AC electric energy into a wireless electric energy. The printing apparatus includes a second coil, a second modulation unit, at least one ePaper, and a drive control unit. The second coil receives the wireless electric energy carrying the printing data from the host. The second modulation unit demodulates the printing data and an operating electric energy from the wireless electric energy received by the coil, in which the operating electric energy is used as an energy source of the printing apparatus. The drive control unit receives the printing data from the second modulation unit and drives the at least one ePaper to display the printing data.

According to an embodiment of the invention, a printing apparatus including a coil, a modulation unit, at least one ePaper, and a drive control unit is provided. The coil receives a wireless electric energy from an external host, wherein the wireless electric energy carries a printing data. The modulation unit is coupled to the coil. The modulation unit demodulates the printing data and an operating electric energy from the wireless electric energy received by the coil, in which the operating electric energy is used as an energy source of the printing apparatus. The drive control unit is coupled between the modulation unit and the at least one ePaper. The drive control unit receives the printing data and drives the at least one ePaper to display the printing data.

According to an embodiment of the invention, a host including a coil, a processing unit, and a modulation unit is provided. The processing unit outputs a printing data. The modulation unit is coupled to the processing unit and the coil. The modulation unit loads the printing data in a first AC electric energy and outputs a second AC electric energy carrying the printing data to the coil. The coil converts the second AC electric energy to a wireless electric energy, wirelessly transmits an operating electric energy to a printing apparatus by the wireless electric energy for use as an energy source of the printing apparatus, and transmits the printing data to the printing apparatus by the wireless electric energy.

According to an embodiment of the invention, an aligning structure of a wireless data transmission interface is provided, including a first shell body, a first coil, a plurality of magnetic units, a second shell body, a second coil, and an alignment ring. The first coil and the magnetic units are disposed at an inner side of the first shell body. The magnetic units are disposed around the first coil. The second coil and the alignment ring are disposed at an inner side of the second shell body. The alignment ring is disposed around the second coil. When the first shell body is near the second shell body, the first coil and the second coil are aligned with each other by a magnetic force between the magnetic units and the alignment ring.

In summary, according to embodiments of the invention, since the host transmits the printing data and the operating electric energy to the printing apparatus through the wireless data transmission interface, the printing apparatus does not need to be configured with a battery to print or refresh the printing data on the ePaper. After completing the printing or refreshing, even when the host is removed or turned off, the ePaper can still maintain the display content thereof. Therefore, even in a situation in which the user is being asked to turn off the electronic apparatus, the user can still peruse the display content of the ePaper uninterrupted. Moreover, since the printing apparatus may not require a battery, and due to the flexibility and portability of the ePaper, the printing apparatus adopting the ePaper can provide the user a reading experience that is more comfortable and further approaches the traditional paper.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic block diagram of a printing system according to an embodiment of the invention.

FIG. 2 is a schematic view of an application scenario of the printing system depicted in FIG. 1 according to an embodiment of the invention.

FIG. 3 is a schematic view of an application scenario of the printing system depicted in FIG. 1 according to another embodiment of the invention.

FIG. 4 is a schematic block diagram of a host according to another embodiment of the invention.

FIG. 5 is a schematic block diagram of a printing apparatus according to another embodiment of the invention.

FIG. 6 is a perspective schematic view of an alignment structure of a wireless data transmission interface between the host and the printing apparatus in the printing system depicted in FIG. 1 according to an embodiment of the invention.

FIG. 7 is a schematic flow chart of a host performing an ePaper printing operation according to an embodiment of the invention.

FIG. 8 is a schematic flow chart of an ePaper (e.g. an printing apparatus) performing an ePaper printing operation according to an embodiment of the invention.

### DESCRIPTION OF EMBODIMENTS

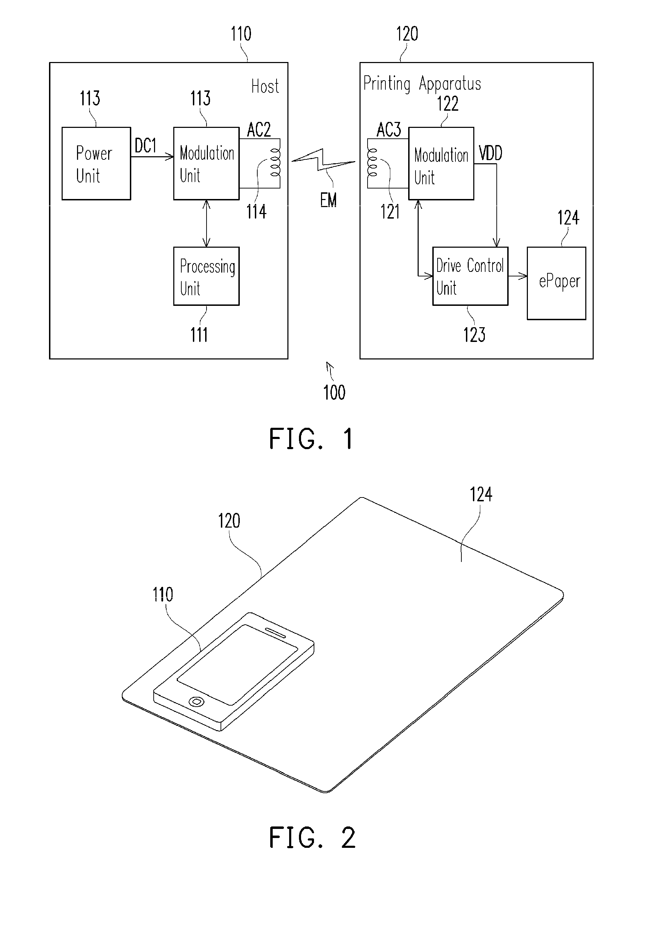

Compared to the liquid crystal display, the flexibility, portability, and energy saving characteristics of the ePaper makes the ePaper more suitable for implementing the eBook or the eReader. eBooks or eReaders implemented by ePaper can provide a user a reading experience that is more relaxed and closer to the traditional paper. After refreshing the display content of the ePaper, the ePaper does not require an operating electric energy to maintain the display content until the refresh of the display content next time. The present embodiment describes a printing system 100 using an ePaper. FIG. 1 is a schematic block diagram of the printing system 100 according to an embodiment of the invention. The printing system 100 includes a host 110 and a printing apparatus 120.

Based on a design requirement, the host 110 may be a telephone, a personal computer, a notebook computer, a tablet computer, an eBook reader, a camera, or any other electronic apparatuses requiring the output/printing of words and/or images. In other embodiments, the host 110 may also be any public communication/vending machines, such as a public telephone, an automatic vending machine, etc. With the automatic vending machine as an example, the host 110 may be an eBook providing apparatus for providing/selling eBooks to the user.

The host 110 includes a processing unit 111, a first modulation unit 112, a power unit 113, and a first coil 114. The processing unit 111 outputs a printing data to the first modulation unit 112. The power unit 113 may be used as an energy source of the host 110 to provide an operating electric energy required by the internal components (e.g., the processing unit 111 and the first modulation unit 112) of the host 110. The power unit 113 may be a power supply, an adapter, a battery, a regulator, and/or other power providing circuits. The power unit 113 outputs a stable first direct current (DC) electric energy DC1 to the first modulation unit 112. The first modulation unit 112 may convert the first DC electric energy DC1 into a first alternating current (AC) electric energy AC1 (described later). The first AC electric energy AC1 is used as a carrier wave to transmit the printing data to the printing apparatus 120.

By using any modulation techniques, for example a modulation technique known to persons with ordinary knowledge in the field of communications, the first modulation unit 112 loads the printing data from the processing unit 111 in the first AC electric energy AC1, and then outputs a second AC electric energy AC2 carrying the printing data (i.e., the first AC electric energy AC1 after modulation) to the first coil 114. The first coil 114 may convert the second AC electric energy AC2 into a wireless electric energy EM. In the present embodiment, an axial direction of the first coil 114 is substantially perpendicular to a first shell body 116 (described later) of the host 110. Therefore, an electromagnetic field (e.g. the wireless electric energy EM) generated by the first coil 114 may be substantially emitted from/into the first shell body 116.

The printing apparatus 120 includes a second coil 121, a second modulation unit 122, a drive control unit 123, and at least one electronic paper (ePaper) 124. A display medium of the ePaper 124 may be a bistable (or multi-stable) display medium, such as electronic ink (E-Ink), electrofluidics, cholesteric liquid crystal, electrophoretic display (EPD), or electrowetting display (EWD), for example.

The second coil 121 receives the wireless electric energy EM carrying the printing data from the host 110. In the present embodiment, an axial direction of the second coil 121 is substantially perpendicular to a second shell body (described later) of the printing apparatus 120. When the printing apparatus 120 approaches the host 110 (an outer side of the first shell body 116 of the host 110 may even come in contact with an outer side of the second shell body 126 of the printing apparatus), and the second coil 121 is near the first coil 114, the first coil 114 and the second coil 121 form an equivalent transformer. Therefore, the second coil 121 may sense/receive the electromagnetic field (e.g. the wireless electric energy EM) generated by the first coil 114, and accordingly generate a third AC electric energy AC3. The second modulation unit 122 demodulates the printing data and an operating electric energy VDD from the wireless electric energy EM received by the second coil 121. The operating electric energy VDD may be used as an energy source for the internal components (e.g., the drive control unit 123) of the printing apparatus 120. Since the operating electric energy VDD of the printing apparatus 120 is provided by the host 110, the printing apparatus 120 may not require a battery or an adapter, and accordingly the volume and weight of the printing apparatus 120 can be reduced.

The drive control unit 123 receives the printing data from the second modulation unit 123 and drives the ePaper 124 to display the printing data. Based on the different display media of the ePaper 124, the drive control unit 123 may employ any corresponding driving techniques, for example a drive technique known to persons with ordinary knowledge in the field of electronic paper, and therefore further description thereof is omitted.

With the help of integrated circuit techniques, the printing apparatus 120 may be made as thin as possible, even as lightweight, thin, and flexible as paper. For example, FIG. 2 is a schematic view of an application scenario of the printing system 100 depicted in FIG. 1 according to an embodiment of the invention. In the present embodiment, the host 110 is implemented with a smart phone, and the printing apparatus 120 is implemented with a single sheet of ePaper (looking like a piece of plastic paper). The printing apparatus 120 is not supplied with a battery. Referring to FIGs. 1 and 2, the first coil 114 is disposed at a backside of the host 110. When the host 110 is placed above the second coil 121 of the printing apparatus 120, the printing apparatus 120 can receive the wireless electric energy EM from the host 110, and obtain the operating electric energy VDD from the wireless electric energy EM. Therefore, the printing apparatus 120 with no battery or other energy source can use the operating electric energy VDD provided by the host 110 to perform each function, including demodulating the printing data from the wireless electric energy EM, and printing/displaying the printing data on the ePaper 124. Even if the host 110 is removed or turned off and causes the printing apparatus 120 to lose the operating electric energy VDD after completing the printing or displaying operation, due to the properties of the bistable (or multi-stable) display medium, the ePaper 124 can still maintain the display content corresponding to the printing data.

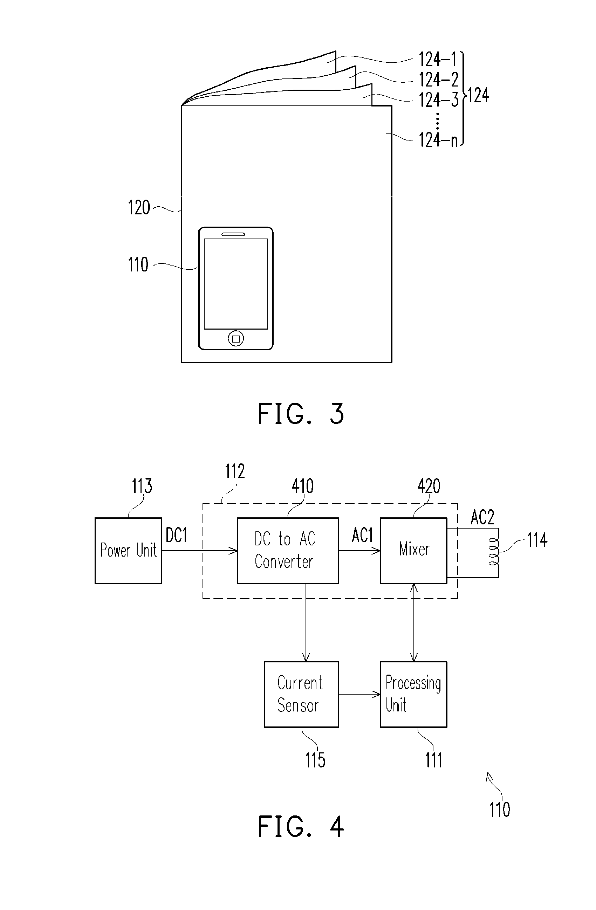

The printing apparatus 120 of the aforementioned embodiment is configured with a single sheet of ePaper, although the implementation thereof is not limited thereto. Persons skilled in the art may implement the printing apparatus 120 in any exterior shape or structure according to a product design requirement. For example, FIG. 3 is a schematic view of an application scenario of the printing system 100 depicted in FIG. 1 according to another embodiment of the invention. In the present embodiment, the printing apparatus 120 is configured with a plurality of ePapers 124, for example ePapers 124-1, 124-2, 124-3,...124-n. The ePapers 124-1-124-n are binded into an exterior shape that resembles a book. The second coil 121 of the printing apparatus 120 is disposed at a bottom left corner of the cover (or back cover) ePaper 124-n. When the first coil 114 of the backside of the host 110 is near the second coil 121 of the printing apparatus 121 (as shown in FIG. 3), the printing apparatus 120 can receive the wireless electric energy EM from the host 110, and obtain the operating electric energy VDD from the wireless electric energy EM. The user can use the host 110 to remotely download the printing data (e.g. an eBook) to the host 110, and then use the host 110 to print or display the printing data on the ePapers 124-1-124-n. Therefore, even in a situation in which the user is being asked to turn off the host 110, the user can still peruse the display content of the ePapers 124-1-124-n uninterrupted. Moreover, since the printing apparatus 120 may not require a battery, and due to the flexibility and portability of the ePapers 124-1-124-n, the printing apparatus 120 adopting the ePapers 124-1-124-n can provide the user a reading experience that is more comfortable and further approaches the traditional paper.

FIG. 4 is a schematic block diagram of the host 110 according to another embodiment of the invention. Description of the present embodiment can be referred to FIG. 1. A difference from the embodiment depicted in FIG. 1 is that the host 110 shown in FIG. 4 further includes a current sensor 115. Referring to FIG. 4, the first modulation unit 112 includes a DC to AC converter 410 and a first mixer 420. The DC to AC converter 410 converts the first DC electric energy DC1 to the first AC electric energy AC1. The first mixer 420 may be a modulator. The first mixer 420 is coupled to the DC to AC converter 410 and the processing unit 111. The first mixer 420 employs any modulation techniques, for example a modulation technique known to persons with ordinary knowledge in the field of communications, to load the printing data from the processing unit 111 in the first AC electric energy AC1.

The current sensor 115 may detect a current amount of the DC to AC converter 410. For example, an input current amount of the DC to AC converter 410 is detected (i.e., the amount of current of the first DC electric energy DC1), or an output current amount of the DC to AC converter 410 is detected (i.e., the amount of current of the first AC electric energy AC1). When the printing apparatus 120 obtains the operating electric energy VDD from the wireless electric energy EM of the first coil 114, the current amount of the DC to AC converter 410 is correspondingly increased. Therefore, the current sensor 115 can determine whether the printing apparatus 120 has received the wireless electric energy EM by detecting the current amount of the DC to AC converter 410. The current sensor 115 transmits a detection result to the processing unit 111. According to the detection result of the current sensor 115, the processing unit 111 can determine when the printing apparatus 120 can received the wireless electric energy EM. When the printing apparatus 120 receives the wireless electric energy EM, the processing unit 111 can output the printing data to the first mixer 420. After the first mixer 420 receives the printing data, the first mixer 420 loads the printing data in the first AC electric energy AC1 and outputs the second AC electric energy AC2 carrying the printing data to the first coil 114.

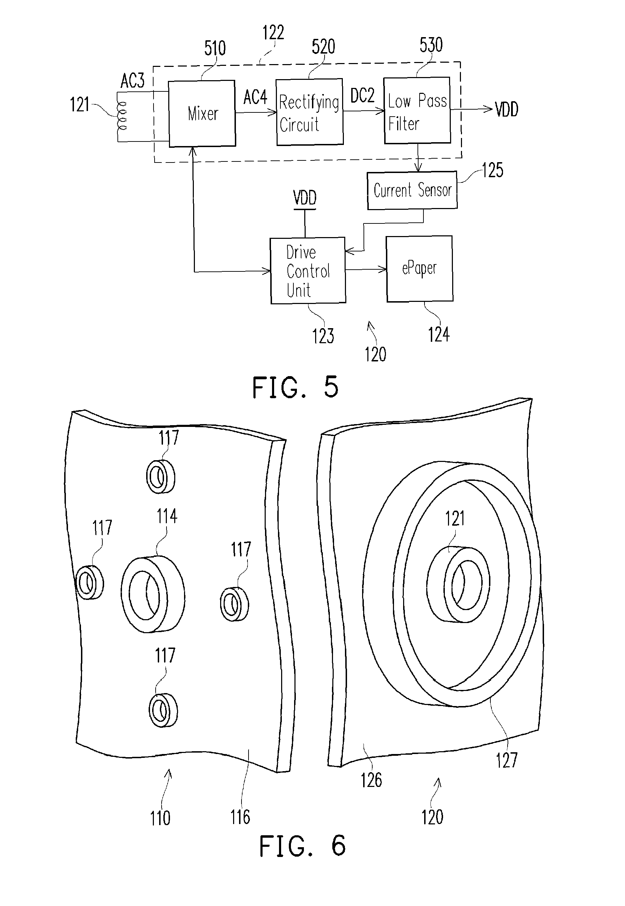

FIG. 5 is a schematic block diagram of the printing apparatus 120 according to another embodiment of the invention. Description of the present embodiment can be referred to FIG. 1. A difference from the embodiment depicted in FIG. 1 is that the printing apparatus 120 shown in FIG. 5 further includes a current sensor 125. Referring to FIG. 5, the second modulation unit 122 includes a second mixer 510, a rectifying circuit 520, and a low pass filter 530. The second mixer 510 receives the wireless electric energy EM (i.e. the third AC electric energy AC3) from the first coil 114 through the second coil 121, and demodulates the printing data and an AC current AC4 from wireless electric energy EM. The rectifying circuit 520 is coupled to the second mixer 510 to receive the AC current AC4 and to rectify the AC current AC4 into a DC current DC2. The rectifying circuit 520 may be a half-wave rectifier or a full-wave rectifier, such as a bridge rectifier.

The low pass filter 530 is coupled to the rectifying circuit 520. The low pass filter 530 receives the DC current DC2 and filters a high frequency component of the DC current DC2 to obtain the operating electric energy VDD. The current sensor 125 may detect a current amount of the low pass filter 530. For example, an input current amount of the low pass filter 530 is detected (i.e., the amount of current of the DC current DC2), or an output current amount of the low pass filter 530 is detected (i.e., the amount of current of the operating electric energy VDD). By determining the amount of current of the low pass filter 530, the current sensor 125 can determine whether the operating electric energy VDD currently obtained from the wireless electric energy EM is enough to satisfy an electric power requirement of the printing apparatus 120 for stable operation. The current sensor 125 transmits a detection result to the drive control unit 123. According to the detection result of the current sensor 125, the drive control unit 123 can determine when the operating electric energy VDD is ready. When the operating electric energy VDD is ready, the drive control unit 123 can receive the demodulated printing data from the second mixer 510, and then drive the ePaper 124 to display the printing data.

The shell body of the printing apparatus 120 and/or the host 110 may be printed with a sign/mark to guide the user into aligning the first coil 114 and the second coil 121 with each other by moving the printing apparatus 120 and/or the host 110. Alternatively, an aligning structure can be disposed at an internal side (or an external side) of the shell body of the printing apparatus 120 and/or the host 110. For example, FIG. 6 is a perspective schematic view of an aligning structure of a wireless data transmission interface between the host 110 and the printing apparatus 120 in the printing system 100 depicted in FIG. 1 according to an embodiment of the invention. Referring to FIG. 6, the first shell body represents an outer shell of the host 110, and the second shell body 126 represents an outer shell of the printing apparatus 120.

The first coil 114 and a plurality of magnetic units 117 are disposed at an inner side of the first shell body 116 (i.e., configured at an inner portion of the host 110). The magnetic units 117 are disposed around the first coil 114. The second coil 121 and an alignment ring 127 are disposed at an inner side of the second shell body 126 (i.e., configured at an inner portion of the printing apparatus 120). The alignment ring 127 is disposed around the second coil 121, as shown in FIG. 6. A material of the alignment ring 127 includes ferromagnetic materials such as iron, nickel, cobalt, and other metals. The plurality of the magnetic units 117 are permanent magnets or electromagnets. Therefore, when the first shell body 116 is near the second shell body 126, the first coil 114 and the second coil 121 are aligned with each other by a magnetic force between the magnetic units 117 and the alignment ring 127.

When the magnetic units 117 are implemented by electromagnets, then the processing unit 111 may determine whether to trigger the magnetic units 117 to generate a magnetic field. In a period when the transmission or the printing of the printing data to the ePaper 124 is not needed, the processing unit 111 disables the magnetic units 117. During a period for transmitting or printing the printing data to the ePaper 124, the processing unit 111 triggers the magnetic units 117 to generate the magnetic field for improving the accuracy of the alignment between the first coil 114 and the second coil 121.

In another embodiment, the host 110 is internally configured with a reed switch. A conductive state of the reed switch is determined by whether the alignment ring 127 is near the host 110. Therefore, the processing unit 111 may determine whether the printing apparatus 120 is near the host 110 according to the conductive state of the reed switch. When the conductive state of the reed switch indicates the printing apparatus 120 is near the host 110, the processing unit 111 triggers the magnetic units 117 to generate the magnetic field for improving the accuracy of the alignment between the first coil 114 and the second coil 121.

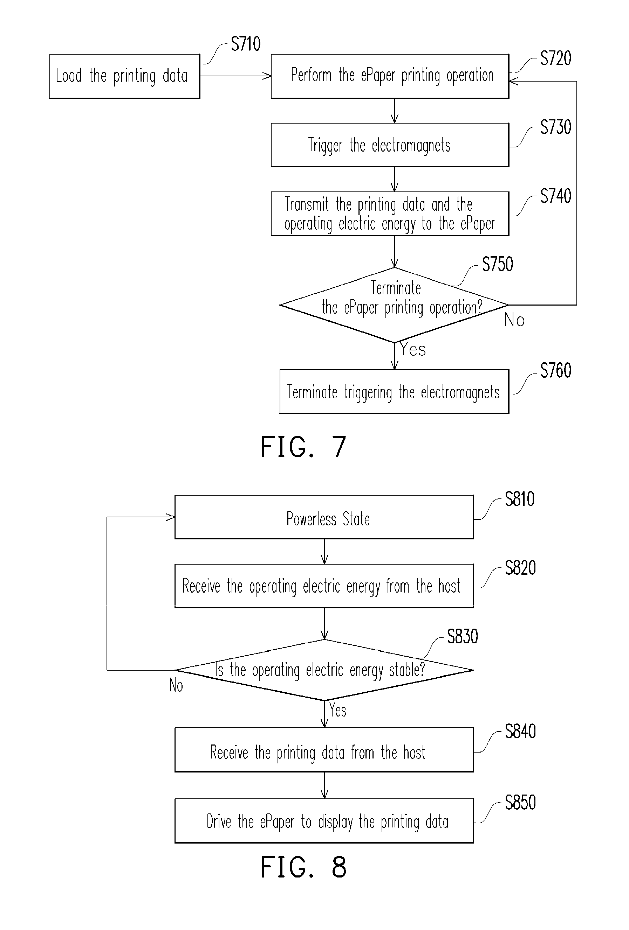

FIG. 7 is a schematic flow chart of the host 110 performing the ePaper printing operation according to an embodiment of the invention. In a Step S710, the printing data is loaded in the host 110. For example, the host 110 may request a remote server to download a webpage, an eBook, a photograph, or other types of printing data through the Internet. Moreover, when the host 110 is a digital camera or other electronic apparatus having an image capturing function, for instance, then the host 110 may capture a target image (i.e. the printing data) with an image sensing circuit.

After the host 110 has prepared the printing data, the host 110 may perform a Step 720 to begin the ePaper printing operation described in the previous embodiments. When the user causes the host 110 and the printing apparatus 120 to be near each other, the conductive state of the reed switch internally disposed in the host 110 is correspondingly altered. When the conductive state of the reed switch indicates the printing apparatus 120 is near the host 110, the processing unit 111 may begin a Step 5730 to trigger the plurality of magnetic units (e.g., electromagnets or coils) to generate the magnetic field. The magnetic force between the magnetic units 117 internally disposed in the host 110 and the alignment ring 127 internally disposed in the printing apparatus 120 can improve the accuracy of the alignment between the first coil 114 and the second coil 121.

Under a condition that the conductive state of the reed switch indicates that the printing apparatus 120 is near the host 110, and under a condition that the current sensor 115 detects the current amount of the DC to AC converter 410 is greater than a threshold value, the processing unit 111 begins performing a Step 740 to transmit the printing data to the first modulation unit 112. The first modulation unit 112 and the first coil 114 transmits the wireless electric energy EM carrying a printing data to the second coil 121 of the printing apparatus 120.

In the process of transmitting the printing data, the processing unit 111 dynamically determines whether to terminate the ePaper printing operation (Step S750). When the ePaper printing operation has not been terminated, the processing unit 111 I returns to the Step S720 to continue performing the ePaper printing operation. For example, under the condition that the conductive state of the reed switch indicates that the printing apparatus 120 is near the host 110, and under the condition that the current sensor 115 detects the current amount of the DC to AC converter 410 is greater than a threshold value, the processing unit 111 continues performing the ePaper printing operation. However, under a condition that the conductive state of the reed switch indicates that the printing apparatus 120 is removed from the host 110, or under a condition that the current sensor 115 detects the current amount of the DC to AC converter 410 is less than a threshold value, the processing unit 111 restarts the ePaper printing operation.

When the user issues a command to terminate printing, or all of the printing data has been transmitted, the processing unit 111 notifies the ePaper (e.g. the printing apparatus 120) that the ePaper printing operation has been terminated through the first modulation unit 112 and the first coil 114. Thereafter, the processing unit 111 performs a Step S760 to terminate the current of the magnetic units 117 and to terminate the triggering of the electromagnets.

FIG. 8 is a schematic flow chart of the ePaper (e.g. the printing apparatus 120) performing the ePaper printing operation according to an embodiment of the invention. When the host 110 is removed from the printing apparatus 120, the printing apparatus 120 is in a powerless state due to the loss of the energy source (Step S810). When the first coil 114 of the host 110 is near the second coil 121 of the printing apparatus 121, the printing apparatus 120 can obtain the operating electric energy VDD from the wireless electric energy EM received by the second coil 121 (Step S820). Next, the drive control unit 123 detects through the current sensor 125 whether the current amount of the low pass filter 530 is greater than a threshold value. In other words, whether the operating electric energy VDD obtained from the wireless electric energy EM is stable is determined (Step S830). Under a condition that the current sensor 125 detects the current amount of the low pass filter 530 is greater than a threshold value, the drive control unit 123 notifies the host 110 to begin transmitting the printing data through the second modulation unit 122 and the second coil 121. Accordingly, the drive control unit 123 may receive the printing data from the host 110 through the second modulation unit 122 and the second coil 121 (Step S840), and drive the ePaper 124 to display the printing data (Step S850).

In view of the foregoing, according to the embodiments described above, the host 110 transmit the printing data and the operating electric energy VDD to the printing apparatus 120 through the wireless data transmission interface. Since the operating electric energy VDD is provided by the host 110 through the wireless data transmission interface, the printing apparatus 120 does not need to be configured with a battery to print or refresh the printing data on the ePaper 124. After completing the printing or refreshing, even when the host 110 is removed or turned off, the ePaper 124 can still maintain the display content thereof. Especially in a situation in which the user is being asked to turn off the electronic apparatus, as long as the user prints or displays the printing data (e.g. an eBook) on the ePaper 124, even when the host 110 and the printing apparatus 120 are powered off, the user can still peruse the printing data already printed on the ePaper 124 uninterrupted. Moreover, since the printing apparatus 120 may not require a battery, and due to the flexibility and portability of the ePaper 124, the printing apparatus 120 adopting the ePaper 124 can provide the user a reading experience that is more comfortable and further approaches the traditional paper.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A printing system (100), comprising:
a host (110) comprising a first coil (114), a first modulation unit (112), and a processing unit (111), wherein the processing unit (111) outputs a printing data to the first modulation unit (112), the first modulation unit (112) loads the printing data in a first alternating current (AC) electric energy and outputs a second AC electric energy carrying the printing data to the first coil (114), and the first coil (114) converts the second AC electric energy into a wireless electric energy; and
a printing apparatus (120) comprising a second coil (121), a second modulation unit (122), at least one electronic paper (ePaper) (124), and a drive control unit (123), wherein the second coil (121) receives the wireless electric energy carrying the printing data from the host (110), the second modulation unit (122) demodulates the printing data and an operating electric energy from the wireless electric energy received by the second coil (121), wherein the operating electric energy is used as an energy source of the printing apparatus (120), the drive control unit (123) receiving the printing data from the second modulation unit (122) and drives the at least one ePaper (124) to display the printing data.

2. The printing system (100) as claimed in claim 1, wherein the host (110) further comprises a plurality of magnetic units (117) disposed around the first coil (114); and the printing apparatus (120) further comprises an alignment ring (127) disposed around the second coil (121), and a material of the alignment ring (127) comprises a ferromagnetic material.

3. The printing system (100) as claimed in claim 2, wherein the plurality of magnetic units (117) are electromagnets.

4. The printing system (100) as claimed in claim 1, wherein the first modulation unit (112) comprises:
a direct current (DC) to AC converter (410) converting a DC electric energy to the first AC electric energy; and
a first mixer (420) coupled to the DC to AC converter (410) and the processing unit (111), the first mixer (420) loading the printing data in the first AC electric energy and outputting the second AC electric energy carrying the printing data to the first coil (114).

5. The printing system (100) as claimed in claim 1, wherein the second modulation unit (122) comprises:
a second mixer (510) receiving the wireless electric energy from the first coil (114) through the second coil (121), and demodulating the printing data and an AC current from the wireless electric energy;
a rectifying circuit (520) coupled to the second mixer (510) to receive the AC current and to rectify the AC current into a DC current; and
a low pass filter (530) coupled to the rectifying circuit (520) to receive the DC current and to filter the DC current to obtain the operating electric energy.

6. The printing system (100) as claimed in claim 1, wherein the host (110) is a telephone, a computer, a camera, or an electronic book (eBook) providing apparatus.

7. A printing apparatus (120), comprising:
a coil (121) receiving a wireless electric energy from a host (110), wherein the wireless electric energy carries a printing data;
a modulation unit (122) coupled to the coil (121), the modulation unit (122) demodulating the printing data and an operating electric energy from the wireless electric energy received by the coil (121), wherein the operating electric energy is used as an energy source of the printing apparatus (120);
at least one ePaper (124); and
a drive control unit (123) coupled between the modulation unit (122) and the at least one ePaper (124), the drive control unit (123) receiving the printing data and driving the at least one ePaper (124) to display the printing data.

8. The printing apparatus (120) as claimed in claim 7, further comprising:
an alignment ring (127) disposed around the coil (121), wherein a material of the alignment ring (127) comprises a ferromagnetic material.

9. The printing apparatus (120) as claimed in claim 7, wherein the modulation unit (122) comprises:
a mixer (510) receiving the wireless electric energy through the coil (121) and demodulating the printing data and an AC current from the wireless electric energy;
a rectifying circuit (520) coupled to the mixer (510) to receive the AC current and to rectify the AC current into a DC current; and
a low pass filter (530) coupled to the rectifying circuit (520) to receive the DC current and to filter the DC current to obtain the operating electric energy.

10. A host (110), comprising:
a coil (114);
a processing unit (111) outputting a printing data; and
a modulation unit (112) coupled to the processing unit (111) and the coil (114), the modulation unit (112) loading the printing data in a first AC electric energy and outputting a second AC electric energy carrying the printing data to the coil (114);
wherein the coil (114) converts the second AC electric energy to a wireless electric energy, wirelessly transmits an operating electric energy to a printing apparatus (120) by the wireless electric energy for use as an energy source of the printing apparatus (120), and transmits the printing data to the printing apparatus (120) by the wireless electric energy.

11. The host (110) as claimed in claim 10, further comprising:
a plurality of magnetic units (117) disposed around the coil (114).

12. The host (110) as claimed in claim 10, wherein the modulation unit (112) comprises:
a DC to AC converter (410) converting a DC electric energy to the first AC electric energy; and
a mixer (420) coupled to the DC to AC converter (410) and the processing unit (111), the mixer (420) loading the printing data in the first AC electric energy and outputting the second AC electric energy carrying the printing data to the coil (114).

13. The host (110) as claimed in claim 10, wherein the host (110) is a telephone, a computer, a camera, or an eBook providing apparatus.

14. An aligning structure of a wireless data transmission interface, comprising:
a first shell body (116);
a first coil (114) disposed at an inner side of the first shell body (116);
a plurality of magnetic units (117) disposed at the inner side of the first shell body (116) and around the first coil (114);
a second shell body (126);
a second coil (121) disposed at an inner side of the second shell body (126); and
an alignment ring (127) disposed at the inner side of the second shell body (126) and around the second coil (121), wherein when the first shell body (116) is near the second shell body (126), the first coil (114) and the second coil (121) are aligned with each other by a magnetic force between the magnetic units (117) and the alignment ring (127).

15. The aligning structure of the wireless data transmission interface as claimed in claim 14, wherein a material of the alignment ring (127) comprises a ferromagnetic material.
